# EUROPEAN PATENT APPLICATION

(11) **EP 4 503 075 A1**
(43) Date of publication of application: **05.02.2025**
(21) Application number: 22934933.7
(22) Date of filing: 20.12.2022
(51) Int. Cl.: H01H 3/16, B60D 1/04

(54) **TRAVEL SWITCH, TRAILER HITCH, AND VEHICLE**

(30) Priority: 31.03.2022 CN 202220731803 U
(71) Applicant: Nio Technology (Anhui) Co., Ltd, Hefei City, Anhui 230601 (CN)
(72) Inventor: SHI, Wenhui, Hefei, Anhui 230601 (CN); PAN, Mingyue, Hefei, Anhui 230601 (CN); SHEN, Ke, Hefei, Anhui 230601 (CN); CHENG, Ming, Hefei, Anhui 230601 (CN); LIU, Yuxuan, Hefei, Anhui 230601 (CN)
(74) Representative: Vossius & Partner Patentanwälte Rechtsanwälte mbB
(86) International application number: PCT/CN2022/140257
(87) International publication number: WO 2023/185117

(57) **Abstract**

The disclosure provides a travel switch, a trailer hitch and a vehicle. The travel switch includes: a housing; a shaft body movably received in the housing in an axial direction and provided with a first trigger structure at an outward-facing end of the shaft body; and a second trigger structure movably arranged such that the first trigger structure is pushed via the second trigger structure to trigger the travel switch. By providing the second trigger structure, the travel switch according to the disclosure can provide protection for the trigger structure of the shaft body, thereby reducing the maintenance of the travel switch.

## Description

### TECHNICAL FIELD

The disclosure relates to a travel switch, and a trailer hitch and a vehicle having such a travel switch.

### BACKGROUND ART

A trailer hitch for a vehicle typically includes a tow hook and a corresponding driving mechanism. The driving mechanism can be fixed to a vehicle body, for example to an impact beam of the vehicle. Depending on the requirements, the trailer hitch can be rotated by the driving mechanism to below the vehicle body and in a retracted position, or outside the vehicle body (e.g., behind the vehicle) for mounting, where the vehicle can be said to be in a deployed position. In order to prevent the trailer hitch from shaking during towing, the trailer hitch can also be equipped with a locking device for the tow hook, and a corresponding travel switch for detecting whether the locking device has reached a locking state.

A travel switch for such a trailer hitch is known from the prior art, in which when moving into position, the locking device of the trailer hitch directly acts on a trigger structure of the travel switch and pushes a shaft body, which may result in damage to the trigger structure of the travel switch.

### SUMMARY

According to various aspects, an objective of the disclosure is to provide an improved travel switch, and a trailer hitch and a vehicle having such a travel switch.

In addition, the disclosure further aims to solve or alleviate other technical problems existing in the prior art.

The disclosure solves the above problems by providing a travel switch, which specifically includes:
a housing;
a shaft body movably received in the housing in an axial direction and provided with a first trigger structure at an outward-facing end of the shaft body; and
a second trigger structure movably arranged such that the first trigger structure is pushed via the second trigger structure to trigger the travel switch.

In the travel switch provided according to an aspect of the disclosure, the second trigger structure is assigned to a bracket, the bracket being fixed to an exterior of the housing and having a groove on a side facing the second trigger structure, and the second trigger structure is arranged in the groove and protrudes partially toward the exterior of the housing.

In the travel switch provided according to the aspect of the disclosure, an open receiving cavity is provided at an end of the housing, and the second trigger structure protrudes partially toward the exterior of the housing in the receiving cavity.

In the travel switch provided according to the aspect of the disclosure, the second trigger structure is configured as a spherical member.

In the travel switch provided according to the aspect of the disclosure, the second trigger structure is configured as a steel ball or a synthetic fiber ball.

According to a further aspect of the disclosure, provided is a trailer hitch, which specifically includes:
a tow hook;
an actuating device connected to the tow hook and driving the tow hook to switch between a deployed position and a retracted position;
a locking member movable relative to a locking counterpart of the actuating device for locking the tow hook and the actuating device in the deployed or retracted position; and
a travel switch according to the disclosure as explained above for detecting whether the locking member and the locking counterpart have reached a locking state.

In the trailer hitch provided according to the further aspect of the disclosure, the actuating device includes a driven shaft connected to the tow hook and a fixedly arranged connecting plate, wherein the locking counterpart is configured as a locking groove at an outer circumference of the driven shaft, and the locking member is rotatable into or away from the locking groove about a pivot fixed to the connecting plate.

In the trailer hitch provided according to the further aspect of the disclosure, the locking member is configured as a sector plate, and the locking groove is configured as an arc-shaped groove matching the sector plate.

In the trailer hitch provided according to the further aspect of the disclosure, the travel switch has its housing fixed to the connecting plate, or the travel switch is fixed to the connecting plate by means of a bracket for the second trigger structure.

According to a still further aspect of the disclosure, provided is a vehicle having such a trailer hitch, which will not be described in detail.

By providing the second trigger structure, the travel switch according to the disclosure can provide protection for the trigger structure of the shaft body, thereby reducing the maintenance frequency of the travel switch.

### BRIEF DESCRIPTION OF THE DRAWINGS

The above and other features of the disclosure will become apparent with reference to accompanying drawings, in which:
FIG. 1 shows a perspective view of a trailer hitch according to the disclosure;
FIG. 2 shows a partial view of the trailer hitch in an unlocking state;
FIG. 3 shows a partial view of the trailer hitch in a locking state; and
FIG. 4 shows a partial cross-sectional view of the trailer hitch in the locking state.

### DETAILED DESCRIPTION OF EMBODIMENTS

It is easy to understand that, according to the technical solutions of the disclosure, without changing the essential spirit of the disclosure, those of ordinary skill in the art can put forward various structures and implementations that can be replaced with each other. Therefore, the following detailed description and accompanying drawings are merely an exemplary illustration of the technical solutions of the disclosure, and should not be regarded as all of the disclosure or the restriction or limitation on the technical solutions of the disclosure.

Orientation terms, such as up, down, left, right, front, rear, front side, back side, top, and bottom, which are or may be mentioned in this description, are defined with respect to the structures shown in the accompanying drawing, and are relative concepts, and therefore may correspondingly vary depending on different positions and different usage states. Therefore, these or other orientation terms should not be construed as restrictive terms as well. Moreover, the terms such as "first" "second", "third" or similar expressions are only used for description and distinction purposes, and should not be construed as indicating or implying the relative importance of corresponding members.

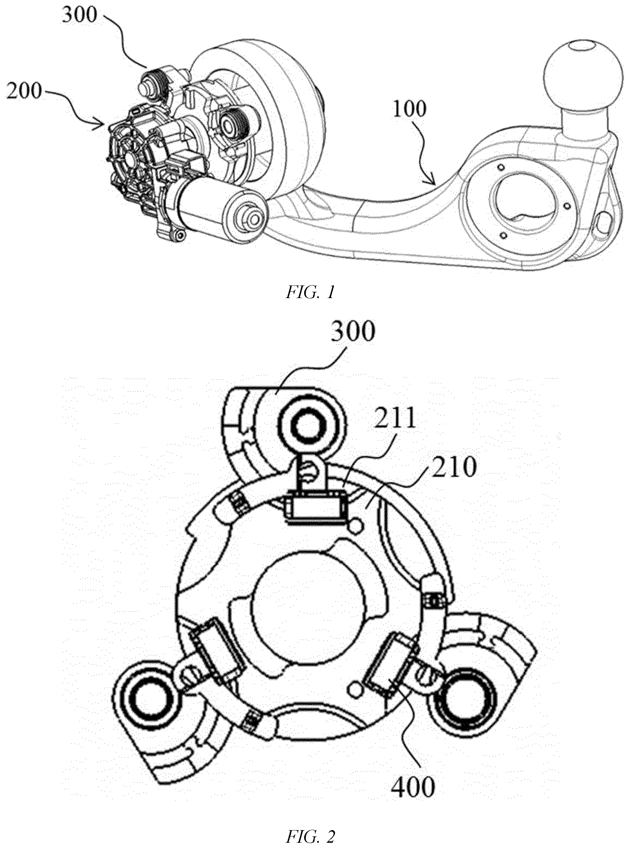

With reference to FIG. 1, which shows a perspective illustration of a trailer hitch according to the disclosure. The trailer hitch is provided with a tow hook 100, an actuating device 200 connected to the tow hook in a torque-transmitting manner, and a locking member 300 for locking the tow hook 100. The tow hook 100 can be switched between a deployed position and a retracted position by means of the actuating device 200.

In one embodiment, the actuating device 200 is provided with a driver, a driving shaft, a transmission disk, and a driven shaft. Only the driven shaft is provided with a reference sign 210 for the sake of clarity. The driver can be configured as an electric motor, in particular a reversible electric motor, and its output shaft is connected to the driving shaft. The transmission disk is connected to the driving shaft in an assembled state and can rotate freely relative to the driven shaft 210, and the driven shaft 210 is connected to, and rotates in synchronism with, the tow hook 100.

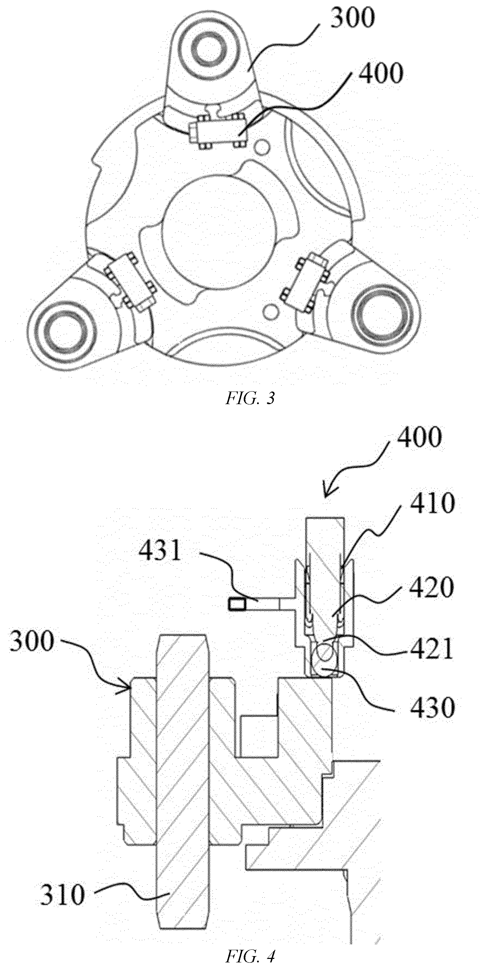

When the driving shaft drives the transmission disk to rotate freely to unlock or lock the movement of the driven shaft 210 and therefore the tow hook 100, the transmission disk is in a rotating state and the driven shaft 210 remains unrotated. When the trailer hitch is in use, the transmission disk is first driven to rotate freely by the driving shaft, the transmission disk drives the locking member 300 and the locking counterpart out of the locking state and thus releases the tow hook 100. The locking counterpart can be arranged at the driven shaft 210 or can be configured as part of the driven shaft 210 itself. The driving shaft then continues to rotate and the driven shaft 210 is driven to rotate by means of the transmission disk, and the rotation of the driven shaft drives the tow hook 100 to switch between the retracted position and the deployed position. Finally, upon reaching the retracted or deployed position (that is, when the tow hook or the driven shaft is rotated into position), the locking member 300 moves back into the locking state with the locking counterpart. This process can likewise be carried out by means of the actuating device 200 mentioned above. Specifically, the driving shaft drives the transmission disk to reversely rotate freely and thus moves the locking member 300 into the locking state. Furthermore, the return of the locking member to the locking state can also be achieved by means of a restoring spring to which the locking member itself is assigned. In this case, the locking member completes an unlocking process and a locking process by means of the driver and the restoring spring, respectively. Reference can be made to FIG. 2 for the unlocking state in which the locking member 300 is disengaged from the locking counterpart. Reference can be made to FIG. 3 for the locking state in which the locking member 300 is in engagement with the locking counterpart.

Here, the locking counterpart can optionally be configured as a locking groove 211 at an outer circumference of the driven shaft 210. The locking groove is open in a direction away from the center of the driven shaft in order to receive the locking member 300. In addition, the actuating device 200 is also provided with a fixedly arranged connecting plate (not shown), and the locking member 300 can rotate about a pivot 310 fixed to the connecting plate so as to be engaged into the locking groove 211 or disengaged from the locking groove 211.

It should be noted here that "free rotation" of the transmission disk relates only to its action on the driven shaft, and during the free rotation the transmission disk can act as a driving mechanism for the locking member. For example, during the free rotation, the transmission disk can drive the locking member 300 received in a groove thereof (which for clarity can also be referred to as a driving groove) to move away from the locking groove 211 of the driven shaft.

Optionally, the locking member 300 may be configured as a sector plate, and correspondingly, the locking groove 211 of the driven shaft as the locking counterpart can be likewise configured as an arc-shaped groove, into which the locking member 300 can be rotated more smoothly and without impact.

Optionally, the locking member 300 and the locking counterpart can also be configured in the form of a jaw. Specifically, the driven shaft 210 is configured to have a jaw on a sub-region of the outer circumference to engage with the locking member.

Here, the number of locking members can be equal to the number of locking counterparts, or the number of locking counterparts can be larger than, in particular a multiple of, the number of locking members. Where the driven shaft is provided with a plurality of locking counterparts, they can be arranged uniformly in a circumferential direction of the driven shaft.

It should be noted that the configuration of the actuating device is not limited to the form explained above, and it can also be configured in any other possible forms. For example, that locking member can be assigned to a special motor-type or mechanical-type driving structure, which can enable the movement of the locking member, for example by driving the pivot of the locking member. This will not be described in detail.

Furthermore, it should be noted that the actuating device for driving the movement of the tow hook and a kinematic device between the actuating device and the tow hook are not limited to the forms mentioned above, but can be configured in any other possible forms. In other words, the free rotation between the components mentioned above is not mandatory. The actuating device can also have a driver and a corresponding transmission member in a conventional manner, which will not be described in detail.

Furthermore, in order to detect whether the locking member 300 and the locking counterpart (for example, the locking groove 211 in the figures) have reached the locking state, the trailer hitch according to the disclosure is also provided with a travel switch 400 which is not visible in FIG. 1 and which is assigned to the locking member or the locking counterpart described above. That is, each locking member or locking counterpart can be assigned to one travel switch, or a plurality of locking members or locking counterparts can be assigned to one travel switch, which is advantageous in particular in the case where a plurality of locking counterparts are arranged uniformly.

Referring to FIG. 4, which shows the travel switch 400 and the locking member 300 in the locking state in a partially cross-sectional view, the travel switch 400 according to the disclosure includes a housing 410 and a shaft body 420. The shaft body is movably received in the housing 410 in an axial direction, which can be understood as a length direction of the shaft body 420. For the travel switch 400, the travel switch is triggered by touching or pushing the shaft body 420 to give an electrical signal characterizing the movement of the locking member into position.

According to the disclosure, in addition to a first trigger mechanism 421 provided at the outward-facing end of the shaft body, the travel switch is provided with a second trigger structure 430 which is arranged movably (e.g., rollably). Here, triggering of the travel switch 400 is implemented in such a way that the locking member 300 first touches the rollable second trigger structure 430 and immediately the first trigger structure 421 is pushed upward by the second trigger structure 430. In particular, as shown in the figures, where the locking member is configured as a sector plate, a tangential impact generated by the locking member during triggering can be converted into rolling and upward movement of the second trigger structure. Thus, only an impact force in the axial direction is exerted on the first trigger structure. Instead of a lateral impact of the locking member on the first trigger structure, the intervention of the rolling friction pair can reduce the impact of the second trigger structure in direct contact and also better protect the first trigger structure of the shaft body. Furthermore, since the second trigger structure is easier to replace and less expensive than the first trigger structure of the shaft body, the travel switch according to the disclosure can reduce the maintenance frequency and maintenance costs to some extent.

Optionally, the second trigger structure 430 is configured as a spherical member or a ball, which can be made of a high-strength material that is resistant to wear. For example, the second trigger structure 430 can be configured as a steel ball, a synthetic fiber ball, or a nylon ball.

Optionally, the second trigger structure 430 can be received in the housing 410 of the travel switch. In particular, an open receiving cavity is provided at an end of the housing, and the second trigger structure 430 is received in the receiving cavity and partially protrudes outward (to be precise, toward the exterior of the housing). Herein, by "partially protrudes" means that the second trigger structure is not completely enclosed in the receiving cavity, but has a part protruding from the receiving cavity, so as to be touched by the locking member.

In a configuration of the second trigger structure as a ball, a support structure having a circular hole segment can be provided at the end of the housing 410 to prevent the ball received in the housing from rolling out thereof. The second trigger structure 430 can rotate by 360° and translate in the axial direction in the housing 410. In addition, the travel switch 400 of this type can have its housing 410 directly fixed to the fixed connecting plate described above.

Optionally, as shown in the figures, the second trigger structure 430 can be assigned to a bracket 431. The bracket is fixed to the exterior of the travel switch 400, in particular surrounds the exterior of the housing 410. A groove is provided on a side of the bracket 431 facing the second trigger structure 430 for supporting the second trigger structure and preventing it from falling off. In an embodiment in which the second trigger structure is configured as a ball, the groove can be configured to be circular and its diameter can be smaller than the diameter of the ball. In addition, the travel switch 400 of this type can be fixed to the fixed connecting plate described above by means of the bracket 430.

Furthermore, it should be noted that the second trigger structure is not limited only to the spherical member mentioned above, it can also be configured as a specially-shaped member. A cam-like configuration, for example, is also possible. In addition, the application scenario of the travel switch according to the disclosure is not limited to the trailer hitch. The travel switch can also be used in other necessary devices or scenarios.

Finally, the disclosure also relates to a vehicle having a trailer hitch according to the disclosure. The actuating device of the trailer hitch can be fixed to an impact beam of the vehicle.

It should be understood that all of the above preferred embodiments are exemplary rather than limiting, and any modification or variation made by those skilled in the art to the specific embodiments described above without departing from the concept of the disclosure shall fall within the scope of legal protection of the disclosure.

## Claims

1. A travel switch, comprising
a housing;
a shaft body movably received in the housing in an axial direction and provided with a first trigger structure at an outward-facing end of the shaft body; and
a second trigger structure movably arranged such that the first trigger structure is pushed via the second trigger structure to trigger the travel switch.

2. The travel switch according to claim 1, wherein the second trigger structure is assigned to a bracket, the bracket being fixed to an exterior of the housing and having a groove on a side facing the second trigger structure, and the second trigger structure is arranged in the groove and protrudes partially toward the exterior of the housing.

3. The travel switch according to claim 1, wherein an open receiving cavity is provided at an end of the housing, and the second trigger structure protrudes partially toward the exterior of the housing in the receiving cavity.

4. The travel switch according to any one of claims 1 to 3, wherein the second trigger structure is configured as a spherical member.

5. The travel switch according to claim 4, wherein the second trigger structure is configured as a steel ball or a synthetic fiber ball.

6. A trailer hitch, comprising:
a tow hook;
an actuating device connected to the tow hook and driving the tow hook to switch between a deployed position and a retracted position;
a locking member movable relative to a locking counterpart of the actuating device for locking the tow hook and the actuating device in the deployed or retracted position; and
a travel switch according to any one of claims 1 to 5 for detecting whether the locking member and the locking counterpart have reached a locking state.

7. The trailer hitch according to claim 6, wherein the actuating device comprises a driven shaft connected to the tow hook and a fixedly arranged connecting plate, wherein the locking counterpart is configured as a locking groove at an outer circumference of the driven shaft, and the locking member is rotatable into or away from the locking groove about a pivot fixed to the connecting plate.

8. The trailer hitch according to claim 7, wherein the locking member is configured as a sector plate, and the locking groove is configured as an arc-shaped groove matching the sector plate.

9. The trailer hitch according to claim 7, wherein the travel switch has its housing fixed to the connecting plate, or the travel switch is fixed to the connecting plate by means of a bracket for the second trigger structure.

10. A vehicle, comprising a trailer hitch according to any one of claims 6 to 9.
